(19) Europäisches Patentamt
European Patent Office
Office européen des brevets

(11) **EP 1 906 563 B1**

(12) **EUROPEAN PATENT SPECIFICATION**

(45) Date of publication and mention
of the grant of the patent:
**27.04.2011 Bulletin 2011/17**

(51) Int Cl.:
***H04B 10/08*** *(2006.01)*

(21) Application number: **06020615.8**

(22) Date of filing: **29.09.2006**

(54) **A method, communication system and central communication unit for detecting a faulty peripheral communication unit**

Verfahren, Kommunikationssystem und zentrale Kommunikationseinheit zum Detektieren von einer fehlerhaften Peripherie-Kommunikationseinheit

Méthode, système de communication et unité centrale de communication pour la détection d'une unité périphérique de communication défectueuse

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**02.04.2008 Bulletin 2008/14**

(73) Proprietor: **Nokia Siemens Networks GmbH & Co. KG**
**81541 München (DE)**

(72) Inventors:
- **Fonseca, Daniel**
  **1350-167 Lisbon (PT)**
- **Hajduczenia, Marek**
  **4505-314 Fiaes (PT)**
- **Monteiro, Paulo**
  **3930-209 Ilhavo (PT)**
- **Silva, Henrique, Prof.**
  **3030-076 Coimbra (PT)**

(56) References cited:
**EP-A2- 0 786 878     US-A- 5 760 940**
**US-A- 5 790 287**

**Description**

In a telecommunication network the so-called "access networks" connect business and residential subscribers to the central offices of service providers. The central offices, in turn, are connected to metropolitan area networks (MANs) or wide area networks (WANs). Access networks are also commonly referred to as the "last mile" or "first mile", where the latter term emphasizes their importance to the subscribers. In today's access networks, telephone companies deploy digital subscriber loop (xDSL) technologies and cable companies deploy cable modems.

Typically, the access networks consist of hybrid fiber coax (HFC) systems with an optical fiber based feeder network between central office and remote node and an electrical distribution network between remote node and subscribers. These access technologies are unable to provide enough bandwidth to current high-speed Gigabit Ethernet local area networks (LANs) and evolving services, e.g., distributed gaming or video on demand. Future first-mile solutions not only have to provide more bandwidth but also have to meet the cost-sensitivity constraints of access networks arising from the small number of cost sharing subscribers.

A "passive optical network" (PON) is a point-to-multipoint optical access network with no active elements in signal path from source to destination. An example of a PON is known from documents US 5760940 A (FRIGO NICHOLAS), 2 June 1998 and EP 0786878 (AT&T CORP), 30 July 1997. Here all the transmissions are performed between an OLT (optical line terminal) and several ONUs (optical network units). The OLT resides in the central office of network service providers and connect the optical access network to the metropolitan area network (MAN) or wide area network (WAN), also referred to as "backbone" of the telecommunication network.

On the other hand the ONUs are located at the end user locations and provide broadband video, data and voice services. Passive optical networks (PONs) address the last mile of communication infrastructure between the service provider's central office (CO), head end or point of presence (PoP) and business or residential customer locations. Data, voice and video must be offered over the same high-speed connection with guarantees of Quality-of-Service (QoS) and the ability to purchase bandwidth as on need basis.

Ethernet PONs (EPONs) have gained a great amount of interest both in industry and academia as a promising cost-effective solution of next-generation broadband access networks. EPONs carry data encapsulated in Ethernet frames, which makes it easy to carry IP packets and eases the interoperability with installed Ethernet LANs. EPONs represent the convergence of low-cost Ethernet equipment (switches, network interface cards (NICs)) and low-cost fiber architectures. Furthermore, given the fact that most of today's data traffic originates from and terminates in Ethernet LANs, EPONs appear to be a natural candidate for future first-mile solutions. The main standardization body behind EPON is the IEEE 802.3ah Task Force. This task force is developing the so-called multipoint control protocol (MPCP) which arbitrates the channel access among central office and subscribers. MPCP is used for dynamically assigning the upstream bandwidth (subscriber-to-service provider), which is the key challenge in the access protocol design for EPONs.

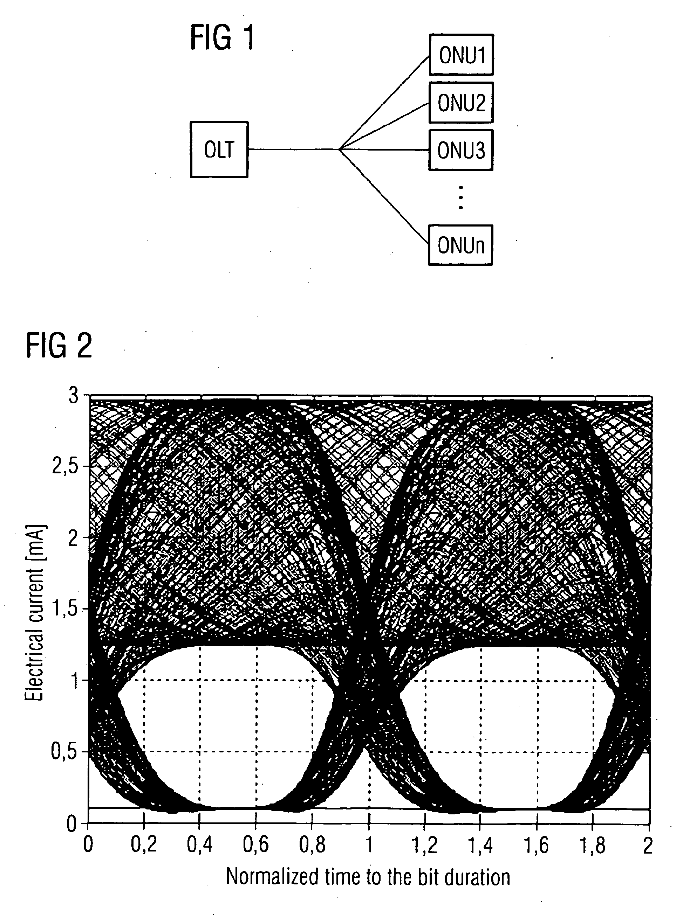

Typically, PONs have a physical tree topology with the central office located at the root and the subscribers connected to the leaf nodes of the tree (see FIG. 1). At the root of the tree is the optical line terminal (OLT) which is the service provider equipment residing at the central office. The PON connects the OLT to multiple optical network units (ONU) (the customer premise equipment) through a 1 : N optical splitter/combiner. An ONU can serve a single residential or business subscriber, referred to as Fiber-to-the-Home/Business (FTTH/B), or multiple subscribers, referred to as Fiber-to-the-curb (FTTC). Each ONU buffers data received from the attached subscriber(s). In general, the round-trip time (RTT) between OLT and each ONU is different. Due to the directional properties of the optical splitter/combiner the OLT is able to broadcast data to all ONUs in the downstream direction. In the upstream direction, however, the ONUs cannot communicate directly with one another. Instead, each ONU is able to send data only to the OLT. Thus, in the downstream direction a PON may be viewed as a point-to-multipoint network and in the upstream direction, a PON may be viewed as a multipoint-to-point network. Due to this fact, the original Ethernet media access control (MAC) protocol does not operate properly since it relies on a broadcast medium.

In the upstream direction, all ONUs share the transmission medium - also called shared medium. To avoid collisions, several approaches can be used. Wavelength division multiplexing (WDM) is currently considered cost prohibitive since the OLT would require a tunable receiver or a receiver array to receive data on multiple wavelength channels and each ONU would need to be equipped with a wavelength-specific transceiver. At present, time division multiplexing (TDM) is considered a more cost-effective solution. With TDM a single transceiver is required at the OLT and there is just one type of ONU equipment.

The MPCP arbitration mechanism developed by the IEEE 802.3ah Task Force is used to dynamically assign non-overlapping up-stream transmission windows (time slots) to each ONU. Beside auto-discovery, registration, and ranging (RTT computation) operations for newly added ONUs, MPCP provides the signalling infrastructure (control plane) for coordinating the data transmissions from the ONUs to the OLT.

The basic idea is that the upstream bandwidth is divided into bandwidth units via TDM. These units are assigned to the ONUs as is determined by the OLT according to the DBA algorithm in use. The OLT has control over the assignment of these units of bandwidth. These units can be assigned on the fly as needed or can be reserved in advance. For efficiency reasons, any reserved units or fraction of units of bandwidth that go unused can in general be re-assigned on the fly by the OLT to other ONUs that could make use of it. Each ONU has a set of queues, possibly prioritized, holding Ethernet frames ready for upstream transmission to the OLT. A DBA (DBA: "Dynamic Bandwidth Allocation") agent in the OLT calculates the up-stream transmission schedule of all ONUs such that channel collisions are avoided. Note that MPCP does not specify any particular DBA algorithm. MPCP simply provides a framework for the implementation of various DBA algorithms. After executing the DBA algorithm, the OLT transmits messages to issue transmission grants. Each message can support up to four transmission grants. Each transmission grant contains the transmission start time and transmission length of the corresponding ONU. Each ONU updates its local clock using the timestamp contained in each received transmission grant. Thus, each ONU is able to acquire and maintain global synchronization. The transmission start time is expressed as an absolute timestamp according to this global synchronization. Each ONU sends backlogged Ethernet frames during its granted transmission window using its local intra-ONU scheduler. The intra-ONU scheduler schedules the packet transmission from the various local queues. The transmission window may comprise multiple Ethernet frames; packet fragmentation is not allowed. As a consequence, if the next frame does not fit into the current transmission window it has to be deferred to the next granted transmission window.

As is described above, individual ONUs are not aware of other ONUs' transmissions (as the PSC is a directional device, an ONU cannot see the signal transmitted upstream by any other ONU). Therefore, the resulting connectivity appears similar to the P2P architecture, where centrally managed access to the upstream channel allows for only a single ONU at a time to deliver pending packets and ONUs in their default state are not allowed to transmit any data unless granted specifically by the OLT. In this way, data collisions are avoided, since the central OLT controller at any and every moment of time is aware of the scheduled transmissions from individual ONUs. The only exception from this centrally managed upstream channel access scheme is the so-called Discovery Process, where new and not initialized ONUs are allowed to register in the EPON system.

A multiple access protocol is required in the upstream direction, since the EPON operates as a multipoint-to-point network and every single ONU talks directly to the OLT. A contention-based media access mechanism is difficult to implement, since in the typical network deployment ONUs cannot detect a collision at the OLT, and providing the architecture with a feedback loop leading to every single ONU is not economically feasible. Contention-based schemes have the drawback of providing a non-deterministic service, i.e., node throughput and channel utilization may be described as statistical averages, and hence there is no guarantee of an ONU getting access to the media in any small interval of time, which means that this type of access protocol is ill-suited for delay-sensitive transmissions, such as video conferencing or VOIP. To introduce determinism in the frame delivery, different non-contention schemes based on request/grant mechanisms have been proposed.

The EPON system operation under standard conditions depicts the basic rule for scheduling transmissions originating from individual ONUs. Under normal circumstances, all data packets originating from active ONUs should therefore reach the PSC node in a non-overlapping manner, avoiding any collisions and arriving at the OLT receiver in a condition fit for detection and data recovery. However, such a system design (currently specified within the IEEE 802.3 - 2005 standard) is highly susceptible to hardware faults, including the following potential events:

- Device fault: medium fault, PHY fault or MAC fault
- Network fault: wire rip/bend, loose connector or dirt contamination.

Network type faults are typically considered graceful, since their occurrence either terminates service for a particular ONU (fault in the given drop section), while leaving other ONUs unaffected, or, for the whole EPON branch, terminating connectivity for all subscribers. Either way, such a signal loss from at least one ONU is easily detectable at the OLT level through the keep-alive mechanism and as such is considered solved. Moreover, a network attacker cannot perform targeted Denial of Service (DoS) on any subscriber equipment apart from his own, and thus network type faults cannot be exploited for malicious activity.

Device type faults are mostly also graceful, since medium and MAC fault renders the particular ONU inoperable, with either bilateral or unilateral signal loss. Either scenario causes the given ONU to be disconnected from the EPON system through the keep-alive mechanism operation. The OLT typically detects such a situation and signals an ONU disconnection event to the network administrator. It must be noted though that, at the OLT level, such an ONU failure cannot be distinguished from a simple ONU power down event, and thus it is typically reported as a general ONU power down state.

There is however one class of ONU device faults which might result in a complete system service severance and may be used for malicious DoS ("Denial of Service") attack on the EPON structure. A PHY level failure might result in an uncontrollable behaviour of the laser diode driver circuitry, leading either to catastrophic avalanche increase in the laser current (resulting in diode destruction through thermal effects) or to laser driver lock in either on or off state. Providing that the laser driver gets locked in the off state, such a PHY failure is similar to any other device type failure and leads to signal loss at the OLT level and consequent ONU disconnection from the polling mechanism. However, a laser driver locked in the on state (Continuous Wave (CW) operation mode, with no modulation) leads to DoS for all ONUs in the system. Providing that the damaged ONU has a sufficiently high power level and its emitted signal is sufficiently broad, no other ONU in the system will be able to transmit data in the upstream channel as long as the disruptive signal is present. The most dangerous feature of this particular failure mechanism is that it might be easily used by a malicious person to spawn a complete DoS attack on the network structure - after all, it is enough to connect a laser source operating in the proper transmission window (1310 nm in case of EPONs), with sufficient emitted power and spectrum width.

Currently, network failures and most types of device failures are detectable only through subscriber feedback (lack of connectivity), and are typically resolved through ONU replacement or by the visit of a qualified technician to the subscriber's site, to examine the ONU equipment in detail. There is no way to distinguish the ONU failure and ONU power down states, from the OLT level (remotely). Therefore, in the case of a DoS event in the network caused by an ONU laser lock event and/or targeted malicious activity, each ONU in the system must be checked by hand, since there are no mechanisms for remote damaged ONU identification under DoS conditions. Typical counter measures in such a situation include sending a team of technicians to all customers connected to the given EPON branch, and testing their ONU equipment to isolate the potentially damaged device. However, sending out technicians is a costly measure which, in addition, results in long network downtimes that reduce QoS and breaches SLAs ("Service Level Agreements") with the customers.

The present invention is therefore directed to mitigate the above mentioned problems and especially to improve the trouble-shooting in EPONs. The object of the invention is achieved in the features of claim 1, 8 and 10.

The inventive method for detecting at least one faulty peripheral communication unit in a network system using a shared medium between a central communication unit and at least one peripheral communication unit comprises the steps of:

- triggering each peripheral communication unit to transmit a clocked signal towards the central communication unit,
- determining whether the clock can be recovered from each transmitted signal, and
- detecting the at least one faulty peripheral communication unit on the basis of the determination results.

One of the advantages of the invention is that faulty peripheral communication units can be detected easily, automatically and without great expenses.

Further advantageous embodiments of the method including a system and a central communication unit for detecting at least one faulty peripheral communication unit according to the invention will emerge from the further claims.

The method according to the invention is explained in more detail below with references to several drawings, in which

FIG. 1    shows an exemplary construction of a PON system.

FIG. 2    shows an example of a typical eye pattern for in-band interference,

FIG. 3    shows an example of a typical eye pattern for out-of-band interference,

FIG. 4    shows a flow chart for OLT side operation of the proposed Fault Discovery Protocol in the downstream transmissions only and

FIG. 5    shows a flow chart for OLT side operation of the proposed Fault Discovery Protocol in the upstream transmissions only.

The following is a description of the physical effects related with the inventive method and as such, it strives to be PON system independent, meaning that the physical background of the described effect is generic and not PON specific. For the purpose the invention, it is irrelevant how the laser of the faulty ONU is driven into the driver lock situation. Additionally, the transmission effects along the optical fibre may be reduced to attenuation, since the bit rate of the optical signal is reduced (1.25 Gbit/s for EPONs, 1.5 Gbit/s for GPONs and 622 Mbit/s for BPONs in the upstream channel) and optical fibre dispersion is negligible for such bit rate. As a consequence, the information eye patterns from the different ONUs at the input of the OLT have negligible intensity distortion, which means that rectangular pulse shapes may be assumed in the detected signal without loss of generality.

In the following embodiment of the invention the DoS occurs due to an interference effect between a modulated optical signal (originating from an ONU operating in a standard way) and a continuous wave (CW) signal (originating from the faulty ONU). The optical signal at the input of the photodetector of the OLT, $E(t)$, is given by:

$$E(t) = A_1(t) \cdot \exp\left[j \cdot \omega_1 \cdot t + j \cdot \phi_1(t)\right] + A_2 \cdot \exp\left[j \cdot \omega_2 \cdot t + j \cdot \phi_2(t)\right] \qquad (1)$$

where $A_x$, $\omega_x$ and $\Phi_x$ are the amplitude of the envelope, the angular frequency and optical phase (mainly due to phase noise of the LASER) of signal x (x= 1 or 2), respectively, and t is the time. The first term on the right-hand side of expression (1) is the modulated signal of the ONU operating in the standard way, whereas the second term is the CW signal. The electrical current at the output of the photodetector, $I(t)$, simplifies to:

$$I(t) = \left|A_1(t)\right|^2 + \left|A_2\right|^2 + 2 \cdot A_1(t) \cdot A_2 \cdot \cos\left[(\omega_1 - \omega_2) \cdot t + \phi_1(t) - \phi_2(t)\right] \qquad (2)$$

Under such circumstances, the interference can take two distinct forms: in-band or out-of-band. In the in-band situation $\omega_1$-$\omega_2$ (the wavelengths of the two signals are almost identical), and expression (2) is further simplified to:

$$I(t) = \left|A_1(t)\right|^2 + \left|A_2\right|^2 + 2 \cdot A_1(t) \cdot A_2 \cdot \cos\left[\phi_1(t) - \phi_2(t)\right] \qquad (3)$$

In expression (3), the first term represents the detected modulated signal, the second term is the detected CW signal, and the third term is the beating between the modulated and CW signals. The eye pattern at the output of the photodetector presents significant intensity distortion due to the presence of this third term. An example of such eye pattern is presented in FIG. 2.

As may be seen in FIG. 2 the information of the modulated signal can still be recognized, although detection errors may occur due to the interference noise present in the higher level. A clock and data recovery (CDR) unit can still lock to a signal similar to the one presented in FIG. 1. However, if one increases significantly the power of the CW signal, the detected eye pattern will close and the CDR will lose lock. At this point, it is important to emphasize that the situation of strictly identical wavelengths between modulated and CW signals is highly improbable in the EPON scenario, because the lasers of the ONUs are independent and subject to different temperature conditions, since they are placed in different locations. Additionally, and according to the EPON standard, the wavelengths of the lasers used in the ONUs must be within a specific range (100 nm wide for upstream channel, with the central wavelength around 1310nm), in order to comply with the IEEE 802.3 - 2005 (values presented in Table 60-3 and 60-6) [10]. In case of GPON and BPON systems, the up-stream transmitter central wavelength must be located within a window of 100 nm (between 1260 and 1360 nm), as defined e.g. in Tables 2d - 2.f in G.984.2 standard.

In the case of the out-of band interference, where $\omega_1 \neq \omega_2$ (the wavelengths of the two signals are significantly different from each other), the electrical current at the output of the photodetector must be modelled by expression (2). However, as the photodetector is followed by electrical circuitry, a low-pass effect occurs and the third term on the right-hand side is filtered out. As a consequence, the electrical current may be approximated by:

$$I(t) = \left|A_1(t)\right|^2 + \left|A_2\right|^2 \qquad (4)$$

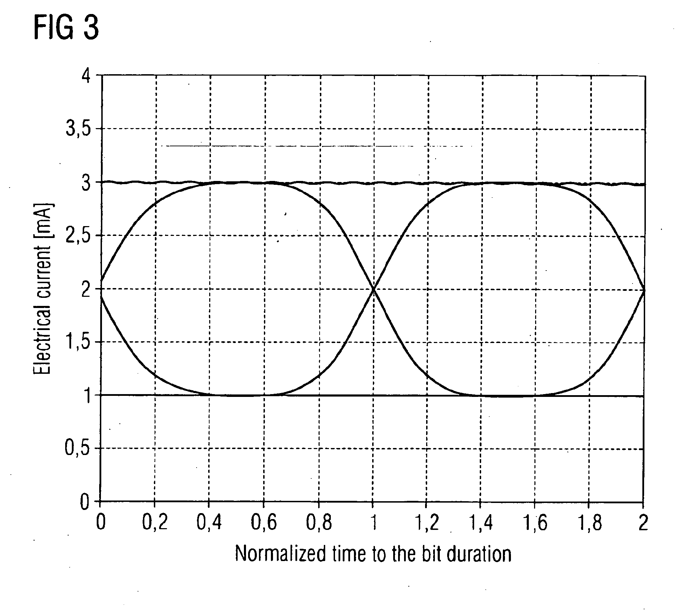

As can be seen by expression (4), the distortion occurs due to the presence of a constant value in the electrical current, given by $|A_2|^2$. FIG. 3 presents the typical eye pattern under such conditions. As can be seen in FIG. 3, the eye pattern is undistorted (high and low logical levels can be clearly identified) as only a constant value is added to the signal. Under this situation, a CDR unit can easily lock onto the bit stream received from an ONU operating in the standard way.

The following description of the inventive Fault Discovery Protocol is hereby applicable to any EPON/GPON/ BPON system, regardless of the actual data rate in the upstream channel (in case of GPON systems). However, in the following embodiment it is assumed that the communication system is an EPON system. It is further assumed that the OLT has free access to a BER meter/error counter as well as to the CDR internal registries, which can be stored in an ONU unique serial number keyed array (where ONU serial number can be its MAC address, GPON Serial_Number value etc.), termed hereby "ONU list", to be used as described below. Additionally, it is assumed that the OLT can freely access any scheduling agent, including transmission scheduler, discovery process agent, etc., which are required for proper operation of the described protocol. In the scope of this example, an error counter is a generic purpose counter capable of storing detected CDR transitions.

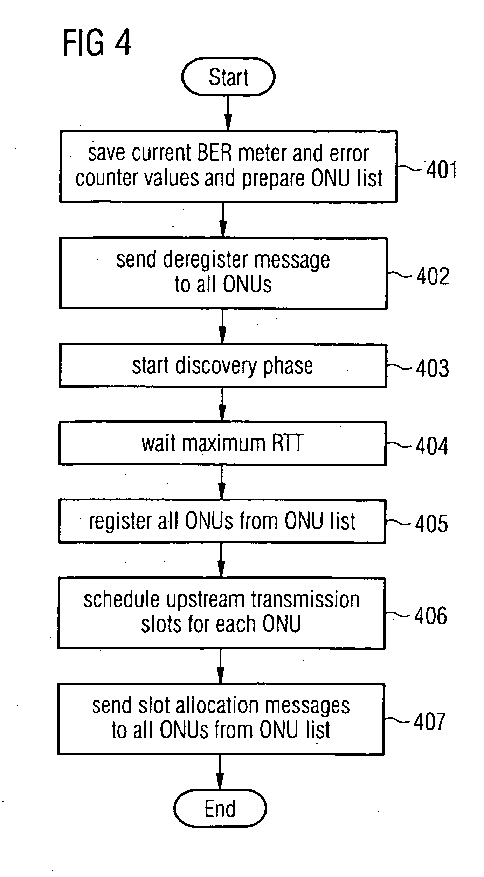

In the downstream direction, the OLT in the proposed mechanism is responsible for the following series of actions (see FIG. 4 for details):

To initialize the protocol the current BER meter and error counter values are saved, as these values might be required later on, once the normal network operation is reestablished. Furthermore a valid ONU list is prepared (step 401), containing all ONUs properly registered and ranged as at the moment preceding the DoS event. The list is keyed with the ONU unique value, in this case the MAC address.

Prior to any specific protocol operation, all ONUs must be deregistered and stop any up-stream transmissions, regardless of packet priority, SLAs ("service level agreements"), etc. For this purpose, in step 402 the OLT transmits a downstream deregistration message to all ONUs in the system. In case of EPON systems, this message is a "REGISTER MPCP DU" with the Deregister flag enabled, as defined in Clause 64.3.6.4 of the IEEE 802.3 ah standard. As a result of this operation, all ONUs receiving the said deregister request transit into unregistered state and wait for a new registration procedure.

In the following step 403, the OLT initiates the discovery phase in the network. In case of EPON systems, a "GATE MPCP DU" with the discovery flag enabled is transmitted downstream, causing all ONUs to attempt the registration process. Since the upstream channel is compromised and cannot be relied upon, the ONU responses will be ignored as it is impossible to assure proper data frame reception. Additionally, since the network was operational prior to the DoS event, the OLT has a list of active ONUs (with the respective MAC addresses), along with ranging information, required for proper slot scheduling. The initial FDP protocol set-up phase is very short and it is unlikely the RTT times for individual ONUs should suffer from significant fluctuations.

Following the transmission of the discovery phase initialization event, the OLT waits the maximum RTT, letting all ONUs in the system complete their registration requests (step 404). As indicated previously, these requests are ignored by the OLT due to DoS in the upstream channel.

Once the discovery phase initialization expires, the OLT completes the registration process for all ONUs in the system, assigning proper logical link identifiers to each one of them (step 405). Therefore the OLT uses the previously saved ONU list and transmits valid "REGISTER MPCP DUs" (in case of EPON systems) with the centrally assigned LLID addresses to all previously active ONUs, to complete their registration process. The "GATE MPCP DU" following the "REGISTER MPCP DU" makes part of the standard Discovery Protocol, allowing each ONU to deliver an upstream "REGISTER_ACK MPCP DU", as described in detail in Clause 64.3.3 of IEEE 802.3 - 2005 standard. "REGISTER_ ACK MPCP DUs" are ignored on reception at the OLT level, since they do not carry any useful data as far as the described protocol is concerned.

In the next step (step 406) the OLT transmission scheduling agent selects the start of the upstream transmission slots for each valid and active ONU from the ONU list. While scheduling upstream transmission slots, care must be taken to maintain the minimum time interval of RTTmax (in EPON systems typically 200 µs, which corresponds to the OLT - ONU distance of 20 km) between the first scheduled upstream transmission slot and the OLT scheduler local time. This measure prevents reorganization of the ONU list order, when receiving upstream slots, as described in the following section concerning the upstream transmission.

In order to maximize the ONU transmission detection probability, each upstream transmission slot sequence may be repeated a number of times (n), defined by the network administrator during system set-up. Under favourable conditions, only one upstream transmission slot sequence (containing one slot per ONU) is sufficient to detect active and damaged machines. In order to increase the detection probability, the upstream transmission slot scheduling process shall be therefore repeated n times, producing a series of n consecutive and continuous upstream transmission slots. It must be noted here that all allocated upstream transmission slots are of a fixed type and have a length of e.g. 1 ms each (106 bits, 62,500 TQ), and thus fit perfectly into a single "GATE MPCP DU" grant slot for EPON systems. The exact number of individual frames per ONU per cycle is left to be decided upon by the network administrator. 1 ms transmission period is argued to be sufficient for detection of any transmission attempts from a functioning ONU.

Once a complete list of upstream transmission slot allocations is ready (containing at least 1 full transmission sequence for all ONUs included in the valid ONU list), the sequence of downstream slot allocation messages ("GATE MPCP DUs") are delivered to the appropriate ONUs in step 407. Once properly received at the ONUs, the slot allocation messages are parsed and processed as in a normal operation mode.

When all slot allocation messages are safely delivered to the corresponding ONUs, the described protocol is considered to have completed its operation in the downstream direction.

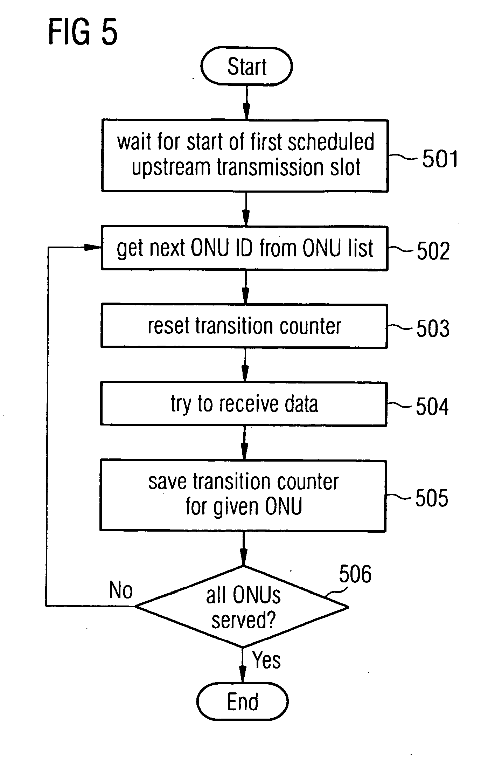

In the upstream direction, the OLT in the proposed mechanism is responsible for the following series of actions (see FIG.5 for details) :

In the upstream channel, the OLT shall wait for the start of the first scheduled upstream transmission slot (step 501). Initial discovery phase specific transmissions (including "REGISTER_REQ" and "REGISTER_ACK MPCP DUs") shall be ignored, since signal quality and proper frame delineation cannot be assured under DoS conditions on the upstream channel. Once the first upstream transmission slot time arrives, the OLT starts the fault discovery protocol operation in the upstream channel.

The OLT obtains the scheduled ONU unique identifier (MAC address) from the valid ONU list (step 502), resets the BER meter / error counter (step 503), and starts receiving data (step 504). Providing that the scheduled ONU does transmit a data stream in the allocated slot (typically, subscriber packets pending transmission), the CDR circuitry in the OLT will try to lock to the received signal, as discussed in detail above, producing a distorted bit pattern (distortion degree depend on the actual cross-talk situation and power level relations between the disturbed and disturbing signals). Since as indicated previously, it is sufficient to observe the CDR transition counter, one is not interested in receiving actually fully formed and recognized data frames but rather in retrieving the data clock from the upstream transmission. This, as it was proven already above, can be assured under any conditions with out-of-band distortion. Providing that the disturbed and distributing data channels have overlapping wavelengths, still at least clock data recovery can be performed, even if individual packets cannot be retrieved from the upstream transmission. This can be directly interpreted as an active ONU attempting transmission in top of the DoS signal originating from a different ONU. At the end of the transmission slot time, the current value of the CDR transition counter (termed transmission attempt counter) is stored in a separate array, keyed with the currently transmitting ONU's unique identifier (step 505). As is described above, the value of the transition counter may be implemented through any error counter the OLT has access to. Since the proposed mechanism shall be included as a firmware extension, access to the CDR module registries is by default enabled.

In step 506 the valid ONU list is checked and, if more entries are found, the process moves back to step 502; otherwise, the fault discovery protocol is finished in the up-stream direction.

Subsequently, the statistics for the fault discovery protocol are produced and it is determined whether or not the individual ONUs are active or faulty. Any clearly active ONUs shall have a non-zero number of transmission attempts, since they try to deliver data in the designed slot. Any inactive, disconnected or faulty ONUs shall have a zero transmission attempt count.

It is also possible that, under highly unfavourable transmission conditions (optical signal power difference between DoS disruptive signal and active ONU signal smaller than 3 dBm and only under strict in-band interference conditions) an active ONU will be recognized as an inactive one. However, it must be stressed that, depending on the quality of the OLT photodetector and PLL circuitry, such situation can only take place if the disturbing ONU is located very close to the OLT (< 1 km), while the active ONU is located at the edge of the logical network reach (around 20 km from the OLT) and additionally both functional and damaged ONUs under examination must have matching central wavelengths (below 1 nm difference between individual central wavelengths). Since ONUs are typically equipped with Fabry Perot type laser diodes, with highly unstable central wavelengths (depending on external temperature conditions for example), it is very unlikely that at any particular time any two ONUs will have exactly overlapping transmission spectra.

It must be noted that the above protocol can be performed several consecutive times. For example, steps 402 to 406 can be repeated to improve the determination whether a certain ONU is faulty or not. In a case like this the operation is similar to the one described above, with only one difference: since in this case the OLT will count the transmission attempts on consecutive upstream transmission slots for each ONU, the previously initiated transmission attempt counter is not reset at the start of each scheduled slot, but instead will be loaded from the respective array field, linked with the given ONU unique identifier. Thus, the transmission attempts during multiple slots are summed up for each ONU. By using several iterations the determination whether or not a ONU is faulty can be improved, as a faulty ONU will have a significantly lower transmission count at the end. In this case, even faulty ONUs that produce a coincidental transmission during their transmission slot can be detected.

## Claims

1. A method for detecting at least one faulty peripheral communication unit (ONU1, ..., ONUn) in a network system using a shared medium between a central communication unit(OLT) and at least one peripheral communication unit (ONU1, ..., ONUn), wherein the at least one faulty peripheral communication unit (ONU1, ..., ONUn) effects an interference in the shared medium by emitting a continuous wave comprising the steps of:

   - triggering each peripheral communication unit (ONU1, ..., ONUn) to transmit a clocked signal towards the central communication unit (OLT),
   - determining whether the clock of each transmitted signal can be recovered from the interference of each transmitted signal and the continuous wave, and

- detecting the at least one faulty peripheral communication unit (ONU1, ..., ONUn) on the basis of the determination results.

2. A method according to claim 1,
   whereby
   a transmission time slot is allocated for each peripheral communication unit (ONU1, ..., ONUn) during which the respective peripheral communication unit (ONU1, ..., ONUn) transmits the clocked signal.

3. A method according to claim 1 or 2,
   whereby
   a peripheral communication unit (ONU1, ..., ONUn) is detected as being faulty when the clock can not be recovered from the transmitted signal.

4. A method according to one of the preceding claims,
   whereby
   the allocation of the transmission time slots is accomplished by deregistering all peripheral communication units (ONU1, ..., ONUn) and re-registering each peripheral communication unit (ONU1, ..., ONUn).

5. A method according to claim 4,
   whereby
   the re-registration is based on information on the previous registration of the peripheral communication units (ONU1, ..., ONUn).

6. A method according to one of the preceding claims,
   whereby
   the shared medium is arranged as a passive optical network.

7. A method according to claim 6,
   whereby
   the passive optical network is arranged according to the standards IEEE 802.3 - 2005 or ITU G.983 or ITU G.984.

8. A communication system for detecting at least one faulty peripheral communication unit (ONU1, ..., ONUn) in a network system using a shared medium between a central communication unit (OLT) and at least one peripheral communication unit (ONU1, ..., ONUn), wherein the at least one faulty peripheral communication unit (ONU1, ..., ONUn) effects an interference in the shared medium by emitting a continuous wave with

   - means for triggering each peripheral communication unit (ONU1, ..., ONUn) to transmit a clocked signal towards the central communication unit (OLT),
   - means for transmitting a clocked signal from each peripheral communication unit (ONU1, ..., ONUn) towards the central communication unit (OLT),
   - means for determining whether the clock of each transmitted signal can be recovered from the interference of each transmitted signal and the continuous wave, and
   - means for detecting the at least one faulty peripheral communication unit (ONU1, ..., ONUn) on the basis of the determination results.

9. A communication system according to claim 8,
   whereby
   means are provided for allocating a transmission time slot for each peripheral communication unit (ONU1, ..., ONUn) during which the respective peripheral communication unit (ONU1, ..., ONUn) transmits the clocked signal.

10. Central communication unit (OLT) for a communication system according to claim 8 or 9,
    With

    - means for triggering each peripheral communication unit (ONU1, ..., ONUn) to transmit a clocked signal towards the central communication unit (OLT),
    - means for determining whether the clock of each transmitted signal can be recovered from the interference of each transmitted signal and the continuous wave, and
    - means for detecting the at least one faulty peripheral communication unit (ONU1, ..., ONUn) on the basis of the determination results.

**11.** Central communication unit (OLT) according to claim 10,
means are provided for allocating a transmission time slot for each peripheral communication unit (ONU1, ..., ONUn)
during which the respective peripheral communication unit (ONU1, ..., ONUn) transmits the clocked signal.


**Patentansprüche**

**1.** Verfahren zum Detektieren mindestens einer fehlerhaften peripheren Kommunikationseinheit (ONU1, ..., ONUn) in
einem Netzwerksystem, das ein gemeinsam benutztes Medium zwischen einer zentralen Kommunikationseinheit
(OLT) und mindestens einer peripheren Kommunikationseinheit (ONU1, ..., ONUn) verwendet, wobei die mindestens
eine fehlerhafte periphere Kommunikationseinheit (ONU1, ..., ONUn) durch Emittieren einer kontinuierlichen Welle
Störungen in dem gemeinsam benutzten Medium bewirkt, mit den folgenden Schritten:

- Triggern jeder peripheren Kommunikationseinheit (ONU1, ..., ONUn), ein getaktetes Signal in Richtung der
zentralen Kommunikationseinheit (OLT) zu senden,
- Bestimmen, ob der Takt jedes gesendeten Signals aus den Störungen jedes gesendeten Signals und der
kontinuierlichen Welle wiederhergestellt werden kann, und
- Detektieren der mindestens einen fehlerhaften peripheren Kommunikationseinheit (ONU1, ..., ONUn) auf der
Basis der Bestimmungsergebnisse.

**2.** Verfahren nach Anspruch 1, wobei
für jede periphere Kommunikationseinheit (ONU1, ..., ONUn) ein Übertragungszeitschlitz vergeben wird, während
dem die jeweilige periphere Kommunikationseinheit (ONU1, ..., ONUn) das getaktete Signal sendet.

**3.** Verfahren nach Anspruch 1 oder 2, wobei
eine periphere Kommunikationseinheit (ONU1, ..., ONUn) als fehlerhaft detektiert wird, wenn der Takt nicht aus
dem gesendeten Signal wiederhergestellt werden kann.

**4.** Verfahren nach einem der vorhergehenden Ansprüche, wobei die Vergabe der Übertragungszeitschlitze durch
Deregistrieren aller peripheren Kommunikationseinheiten (ONU1, ..., ONUn) und Neuregistrieren jeder peripheren
Kommunikationseinheit (ONU1, ..., ONUn) erreicht wird.

**5.** Verfahren nach Anspruch 4, wobei
die Neuregistration auf Informationen über die vorherige Registration der peripheren Kommunikationseinheiten
(ONU1, ..., ONUn) basiert.

**6.** Verfahren nach einem der vorhergehenden Ansprüche, wobei das gemeinsam benutzte Medium als ein passives
optisches Netzwerk ausgelegt ist.

**7.** Verfahren nach Anspruch 6, wobei
das passive optische Netzwerk gemäß den Standards IEEE 802.3 - 2005 oder ITU G.983 oder ITU G.984 ausgelegt
ist.

**8.** Kommunikationssystem zum Detektieren mindestens einer fehlerhaften peripheren Kommunikationseinheit
(ONU1, ..., ONUn) in einem Netzwerksystem, das ein gemeinsam benutztes Medium zwischen einer zentralen
Kommunikationseinheit (OLT) und mindestens einer peripheren Kommunikationseinheit (ONU1, ..., ONUn) verwendet, wobei die mindestens eine fehlerhafte periphere Kommunikationseinheit (ONU1, ..., ONUn) durch Emittieren
einer kontinuierlichen Welle eine Störung in dem gemeinsam benutzten Medium bewirkt, mit

- Mitteln zum Triggern jeder peripheren Kommunikationseinheit (ONU1, ..., ONUn), ein getaktetes Signal in
Richtung der zentralen Kommunikationseinheit (OLT) zu senden,
- Mitteln zum Senden eines getakteten Signals von jeder peripheren Kommunikationseinheit (ONU1,..., ONUn)
zur zentralen Kommunikationseinheit (OLT),
- Mitteln zum Bestimmen, ob der Takt jedes gesendeten Signals aus den Störungen jedes gesendeten Signals
und der kontinuierlichen Welle wiederhergestellt werden kann, und
- Mitteln zum Detektieren der mindestens einen fehlerhaften peripheren Kommunikationseinheit (ONU1, ...,

ONUn) auf der Basis der Bestimmungsergebnisse.

9. Kommunikationssystem nach Anspruch 8, wobei Mittel zum Vergeben eines Übertragungszeitschlitzes für jede periphere Kommunikationseinheit (ONU1, ..., ONUn) vorgesehen sind, während dem die jeweilige periphere Kommunikationseinheit (ONU1, ..., ONUn) das getaktete Signal sendet.

10. Zentrale Kommunikationseinheit (OLT) für ein Kommunikationssystem nach Anspruch 8 oder 9 mit

- Mitteln zum Triggern jeder peripheren Kommunikationseinheit (ONU1, ..., ONUn), ein getaktetes Signal in Richtung der zentralen Kommunikationseinheit (OLT) zu senden,
- Mitteln zum Bestimmen, ob der Takt jedes gesendeten Signals aus den Störungen jedes gesendeten Signals und der kontinuierlichen Welle wiederhergestellt werden kann, und
- Mitteln zum Detektieren der mindestens einen fehlerhaften peripheren Kommunikationseinheit (ONU1, ..., ONUn) auf der Basis der Bestimmungsergebnisse.

11. Zentrale Kommunikationseinheit (OLT) nach Anspruch 10, wobei
Mittel zum Vergeben eines Übertragungszeitschlitzes für jede periphere Kommunikationseinheit (ONU1, ..., ONUn) vorgesehen sind, während dem die jeweilige periphere Kommunikationseinheit (ONU1, ..., ONUn) das getaktete Signal sendet.

**Revendications**

1. Un procédé de détection d'au moins une unité de communication périphérique défectueuse (ONU1, ..., ONUn) dans un système de réseau utilisant un support partagé entre une unité de communication centrale (OLT) et au moins une unité de communication périphérique (ONU1, ..., ONUn), dans lequel l'au moins une unité de communication périphérique défectueuse (ONU1, ..., ONUn) produit un brouillage dans le support partagé en émettant une onde entretenue, comprenant les opérations suivantes :

- amener chaque unité de communication périphérique (ONU1, ..., ONUn) à transmettre un signal d'horloge vers l'unité de communication centrale (OLT),
- déterminer si l'horloge de chaque signal transmis peut être récupérée de l'interférence de chaque signal transmis et de l'onde entretenue, et
- détecter l'au moins une unité de communication périphérique défectueuse (ONU1, ..., ONUn) sur la base des résultats de la détermination.

2. Un procédé selon la revendication 1,
dans lequel un intervalle de temps de transmission est alloué à chaque unité de communication périphérique (ONU1, ..., ONUn) au cours duquel l'unité de communication périphérique respective (ONU1, ..., ONUn) transmet le signal d'horloge.

3. Un procédé selon la revendication 1 ou 2,
dans lequel une unité de communication périphérique (ONU1, ..., ONUn) est détectée comme étant défectueuse lorsque l'horloge ne peut pas être récupérée du signal transmis.

4. Un procédé selon l'une quelconque des revendications précédentes,
dans lequel l'attribution des intervalles de temps de transmission est réalisé en désenregistrant toutes les unités de communication périphériques (ONU1, ..., ONUn) et en réenregistrant chaque unité de communication périphérique (ONU1, ..., ONUn).

5. Un procédé selon la revendication 4,
dans lequel le réenregistrement est basé sur des informations relatives à l'enregistrement précédent des unités de communication périphériques (ONU1, ..., ONUn).

6. Un procédé selon l'une quelconque des revendications précédentes,
dans lequel le support partagé est agencé sous la forme d'un réseau optique passif.

7. Un procédé selon la revendication 6,

dans lequel le réseau optique passif est agencé conformément aux normes IEEE 802.3 - 2005, UIT G.983 ou UIT G.984.

8. Un système de communication destiné à détecter au moins une unité de communication périphérique défectueuse (ONU1, ..., ONUn) dans un système de réseau en utilisant un support partagé entre une unité de communication centrale (OLT) et au moins une unité de communication périphérique (ONU1, ..., ONUn), dans lequel l'au moins une unité de communication périphérique défectueuse (ONU1, ..., ONUn) produit une interférence dans le support partagé en émettant une onde entretenue, avec

    - un moyen pour amener chaque unité de communication périphérique (ONU1, ..., ONUn) à transmettre un signal d'horloge vers l'unité de communication centrale (OLT),
    - un moyen pour transmettre un signal d'horloge de chaque unité de communication périphérique (ONU1, ..., ONUn) vers l'unité de communication centrale (OLT),
    - un moyen pour déterminer si l'horloge de chaque signal transmis peut être récupérée de l'interférence de chaque signal transmis et de l'onde entretenue, et
    - un moyen pour détecter l'au moins une unité de communication périphérique défectueuse (ONU1, ..., ONUn) sur la base des résultats de la détermination.

9. Un système de communication selon la revendication 8,
dans lequel est fourni un moyen pour attribuer un intervalle de temps de transmission pour chaque unité de communication périphérique (ONU1, ..., ONUn) au cours duquel l'unité de communication périphérique respective (ONU1, ..., ONUn) transmet le signal d'horloge.

10. Une unité de communication centrale (OLT) destinée à un système de communication selon la revendication 8 ou 9, avec

    - un moyen pour amener chaque unité de communication périphérique (ONU1, ..., ONUn) à transmettre un signal d'horloge vers l'unité de communication centrale (OLT),
    - un moyen pour déterminer si l'horloge de chaque signal transmis peut être récupérée de l'interférence de chaque signal transmis et de l'onde entretenue, et
    - un moyen pour détecter l'au moins une unité de communication périphérique défectueuse (ONU1, ..., ONUn) sur la base des résultats de la détermination.

11. Une unité de communication centrale (OLT) selon la revendication 10,
dans laquelle est fourni un moyen pour attribuer un intervalle de temps de transmission pour chaque unité de communication périphérique (ONU1, ..., ONUn) au cours duquel l'unité de communication périphérique respective (ONU1, ..., ONUn) transmet le signal d'horloge.

## FIG 1

## FIG 2

FIG 3

# FIG 4

```
                    ┌─────────┐
                    │  Start  │
                    └─────────┘
                         │
                         ▼
    ┌───────────────────────────────────────┐
    │  save current BER meter and error      │──401
    │  counter values and prepare ONU list   │
    └───────────────────────────────────────┘
                         │
                         ▼
    ┌───────────────────────────────────────┐
    │  send deregister message               │──402
    │  to all ONUs                           │
    └───────────────────────────────────────┘
                         │
                         ▼
    ┌───────────────────────────────────────┐
    │  start discovery phase                 │──403
    └───────────────────────────────────────┘
                         │
                         ▼
    ┌───────────────────────────────────────┐
    │  wait maximum RTT                       │──404
    └───────────────────────────────────────┘
                         │
                         ▼
    ┌───────────────────────────────────────┐
    │  register all ONUs from ONU list       │──405
    └───────────────────────────────────────┘
                         │
                         ▼
    ┌───────────────────────────────────────┐
    │  schedule upstream transmission        │──406
    │  slots for each ONU                    │
    └───────────────────────────────────────┘
                         │
                         ▼
    ┌───────────────────────────────────────┐
    │  send slot allocation messages         │──407
    │  to all ONUs from ONU list             │
    └───────────────────────────────────────┘
                         │
                         ▼
                    ┌─────────┐
                    │   End   │
                    └─────────┘
```

# FIG 5

Start

wait for start of first scheduled
upstream transmission slot ~501

get next ONU ID from ONU list ~502

reset transition counter ~503

try to receive data ~504

save transition counter
for given ONU ~505

506
No — all ONUs
served?

Yes

End

**EP 1 906 563 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5760940 A
- EP 0786878 A